# EUROPÄISCHE PATENTSCHRIFT

(11) **EP 2 494 219 B1**
(45) Veröffentlichungstag und Bekanntmachung des Hinweises auf die Patenterteilung: **10.12.2014**
(21) Anmeldenummer: 10778605.5
(22) Anmeldetag: 28.10.2010
(51) Int. Cl.: F01L 1/344, F01L 1/047

(54) **BEFESTIGUNGSANORDNUNG EINES NOCKENWELLENVERSTELLERS**
CONNECTING ARRANGEMENT OF A CAMSHAFT PHASER
SYSTÈME DE FIXATION D'UN DÉPHASEUR D'ARBRE A CAMES

(30) Priorität: 29.10.2009 DE 102009051310
(43) Veröffentlichungstag der Anmeldung: 05.09.2012
(73) Patentinhaber: Schaeffler Technologies GmbH & Co. KG, 91074 Herzogenaurach (DE)
(72) Erfinder: HOPPE, Jens, 91056 Erlangen (DE); BAYRAKDAR, Ali, 90552 Röthenbach/Pegnitz (DE)
(86) Internationale Anmeldenummer: PCT/EP2010/066330
(87) Internationale Veröffentlichungsnummer: WO 2011/051378

(56) Entgegenhaltungen:
- EP-A2- 0 924 392
- WO-A1-89/09344
- DE-A1- 19 955 507
- FR-A1- 2 582 064
- GB-A- 2 156 469
- US-A- 3 721 220
- US-A1- 2009 145 386

## Beschreibung

### Gebiet der Erfindung

Die Erfindung liegt auf dem technischen Gebiet der Brennkraftmaschinen und betrifft eine Befestigungsanordnung zur Befestigung eines Nockenwellenverstellers an einer Nockenwelle. Der Nockenwellenversteller umfasst ein mit einer Kurbelwelle in Antriebsverbindung bringbares Antriebsteil, ein mit der Nockenwelle drehfest verbundenes Abtriebsteil, das drehverstellbar zum Antriebsteil gelagert ist, sowie einen Stellmechanismus, durch den eine Drehwinkelstellung zwischen An- und Abtriebsteil verstellbar ist. Das Abtriebsteil ist über eine zentrale Schraubverbindung mit der Nockenwelle drehfest verbunden.

### Stand der Technik

In Brennkraftmaschinen mit mechanischer Ventilsteuerung werden Gaswechselventile durch Nocken einer kurbelwellengetriebenen Nockenwelle betätigt, wobei über Anordnung und Form der Nocken die Steuerzeiten der Ventile festlegbar sind. Über eine Änderung der Drehwinkellage (Phasenlage) zwischen Kurbel- und Nockenwelle kann Einfluss auf die Steuerzeiten der Ventile genommen werden, wodurch vorteilhafte Effekte wie eine Verminderung des Kraftstoffverbrauchs und der Schadstofferzeugung erreicht werden können. Hinlänglich bekannt ist der Einsatz spezieller Vorrichtungen zur Verstellung der Phasenlage zwischen Kurbel- und Nockenwelle, welche meist als "Nockenwellenversteller" bezeichnet werden.

Allgemein umfassen Nockenwellenversteller ein über ein Antriebsrad mit der Kurbelwelle in Antriebsverbindung stehendes Antriebsteil und ein nockenwellenfestes Abtriebsteil, sowie einen zwischen An- und Abtriebsteil geschalteten Stellmechanismus, welcher das Drehmoment vom An- auf das Abtriebsteil überträgt und eine Verstellung und Fixierung der Phasenlage zwischen diesen beiden ermöglicht. Bei einem hydraulischen Stellmechanismus ist zwischen An- und Abtriebsteil wenigstens ein Paar gegeneinander wirkender Druckkammern vorgesehen, die gezielt mit Druckmittel beaufschlagbar sind, um An- und Abtriebsteil relativ zueinander zu verdrehen und eine Änderung der Phasenlage zwischen Kurbel- und Nockenwelle zu bewirken. Hydraulische Nockenwellenversteller sind beispielsweise in den Druckschriften DE 202005008264 U1, EP 1596040 A2, DE 102005013141 A1, DE 19908934 A1 und WO 2006/039966 der Anmelderin eingehend beschrieben.

Hydraulische Stellmechanismen umfassen gewöhnlich eine elektronische Steuereinrichtung, die auf Basis des momentanen Betriebszustands der Brennkraftmaschine mittels eines elektromagnetisch betätigten Steuerventils den Zu- und Abfluss von Druckmittel regelt. Typischer Weise umfassen die Steuerventile ein zylindrisches Ventilgehäuse und einen im Innern des Ventilgehäuses axial verschiebbaren Steuerkolben, der durch einen elektromagnetisch bewegbaren Stößel gegen die Federkraft eines rückstellenden Federelements verschiebbar ist. Derartige Steuerventile sind als solche wohlbekannt und beispielsweise in dem deutschen Patent DE 19727180 C2, dem deutschen Patent DE 19616973 C2, sowie der europäischen Patentanmeldung EP 1 596 041 A2 der Anmelderin eingehend beschrieben.

In einer gängigen Bauweise ist das Abtriebsteil des Nockenwellenverstellers mit einer zentralen Axialöffnung versehen, die von einer mit einer stirnseitigen Gewindeöffnung der Nockenwelle verschraubten Zentralschraube durchsetzt wird. Durch die Zentralschraube werden das Abtriebsteil und die Nockenwelle kraftschlüssig (drehfest) miteinander verbunden. Eine solche Befestigung des Nockenwellenverstellers an der Nockenwelle ist beispielsweise in der deutschen Offenlegungsschrift DE 102004038681 A1 gezeigt.

Wie dem Fachmann an sich bekannt ist, ist es bei hydraulischen Nockenwellenverstellern üblich, dass das Ventilgehäuse des Steuerventils auch die Funktion der Zentralschraube übernimmt, so dass das Abtriebsteil über das Steuerventil mit der Nockenwelle drehfest verbunden ist.

Weiterhin ist aus der DE 19955507 C2 eine alternative Befestigung des Nockenwellenwellenverstellers mittels zentraler Schraubverbindung an der Nockenwelle bekannt, bei der eine Spannmutter auf einen mit der Nockenwelle verbundenen Schraubschaft geschraubt wird, wodurch das Abtriebsteil des Nockenwellenverstellers mit einem Flanschteil des Schraubschafts axial verspannt wird.

### Aufgabe der Erfindung

Demgegenüber besteht die Aufgabe der vorliegenden Erfindung darin, eine Möglichkeit zur Befestigung des Nockenwellenverstellers mittels zentraler Schraubverbindung an der Nockenwelle zur Verfügung zu stellen, durch welche die bekannten zentralen Schraubverbindungen in vorteilhafter Weise weitergebildet werden.

### Lösung der Aufgabe

Diese und weitere Aufgaben werden nach dem Vorschlag der Erfindung durch eine Befestigungsanordnung zur Befestigung eines Nockenwellenverstellers an einer Nockenwelle mit den Merkmalen des unabhängigen Patentanspruchs gelöst. Vorteilhafte Ausgestaltungen der Erfindung sind durch die Merkmale der Unteransprüche angegeben.

Erfindungsgemäß ist eine Befestigungsanordnung zur Befestigung eines Nockenwellenverstellers mittels einer zentralen Schraubverbindung an einer Nockenwelle gezeigt. Die Befestigungsanordnung umfasst einen Nockenwellenversteller mit einem mit einer Kurbelwelle in Antriebsverbindung bringbaren Antriebsteil, einem mit der Nockenwelle drehfest verbundenen Abtriebsteil, das drehverstellbar zum Antriebsteil gelagert ist, sowie einem insbesondere hydraulischen Stellmechanismus, durch den eine Drehwinkelstellung zwischen An- und Abtriebsteil wahlfrei verstellbar ist. Denkbar sind auch Ausführungsformen, in denen ein elektromechanischer Stellmechanismus vorgesehen ist, wie er beispielsweise in der DE 10 2004 038 681 A1 beschrieben ist

In der erfindungsgemäßen Befestigungsanordnung ist das Abtriebsteil mit einer zentralen Axialöffnung versehen, die von einem Endabschnitt der Nockenwelle durchsetzt ist. Der Endabschnitt kann einteilig mit der Nockenwelle ausgebildet sein oder ein separates Bauteil sein, welches drehfest mit der Nockenwelle verbunden ist. Hierbei weist der Endabschnitt der Nockenwelle einen gewindetragenden Gewindeabschnitt auf, der mit dem Gegengewinde einer das Abtriebsteil beaufschlagenden Spannmutter so verschraubt ist, dass das Abtriebsteil und die Nockenwelle zu deren drehfesten Verbindung axial verspannt werden. Dabei wird die Spannmutter in axialer Richtung elastisch beaufschlagt oder in verspanntem Zustand in axialer Richtung entlastet, so dass einem Lockern bzw. Lösen der Spannmutter effektiv entgegenwirkt wird.

Erfindungsgemäß kann somit in vorteilhafter Weise einem durch Setzen der zentralen Schraubverbindung bedingten Lösen bzw. Lockern der Spannmutter entgegengewirkt werden. Hierdurch ist gewährleistet, dass der mit der Nockenwelle über die Spannmutter axial verspannte Nockenwellenversteller in einer gewünschten Montageposition mit der Nockenwelle drehfest verbunden bleibt, wobei einer Verringerung der zwischen Spannmutter und Abtriebsteil einerseits und Abtriebsteil und Nockenwelle andererseits wirkenden Axialkräfte entgegengewirkt wird. Dies ist insbesondere dann wichtig, wenn die Phasenlagengewirkt wird. Dies ist insbesondere dann wichtig, wenn die Phasenlage von An- und Abtriebsteil über einen hydraulischen Stellmechanismus verstellbar ist, zu welchem Zweck in der Regel in einem Hohlraum der Nockenwelle ein Steuerventil zur Druckmittelsteuerung angeordnet ist, dessen Anschlüsse möglichst genau zu den Anschlüssen des Abtriebsteils ausgerichtet sein sollen, um einen effizienten Druckmitteltransport sicherzustellen.

Bei dem erfindungsgemäßen Nockenwellenversteller kann es sich insbesondere um einen hydraulischen Rotationskolbenversteller handeln, welcher einen mit der Kurbelwelle in Antriebsverbindung bringbaren Außenrotor und einen mit der Nockenwelle drehfest verbundenen Innenrotor, umfasst. Hierbei ist Innenrotor in konzentrischer Anordnung bezüglich einer gemeinsamen Drehachse drehverstellbar zum Außenrotor gelagert, wobei dessen Drehwinkelstellung zum Außenrotor mittels eines zumindest ein gegeneinander wirkendes Druckkammerpaar umfassenden hydraulischen Stellmechanismus verstellbar ist.

Bei einer vorteilhaften Ausgestaltung der erfindungsgemäßen Befestigungsanordnung ist das Abtriebsteil mit bzw. gegen eine von der Nockenwelle geformte Stützfläche durch die Spannmutter axial verspannt, wobei zwischen der das Abtriebsteil beaufschlagenden Spannmutter und dem Abtriebsteil ein elastisch verformbarer Körper angeordnet ist, durch den die Spannmutter elastisch beaufschlagt wird. Der elastisch verformbare Körper kann insbesondere mit der Spannmutter fest verbunden sein. Vorteilhaft ist der elastisch verformbare Körper aus Federstahl gefertigt, wodurch sichergestellt werden kann, dass die zum axialen Verspannen von Abtriebsteil und Nockenwelle erforderliche Kraft bei geeigneter elastischer Kompression übertragen werden kann.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei die Spannmutter selbst als elastisch verformbarer Körper ausgebildet ist. Diese Maßnahme ermöglicht eine in der industriellen Serienfertigung besonders einfache und kostengünstige Realisierung der erfindungsgemäßen Befestigungsanordnung, wobei die Spannmutter im verspannten Zustand in axialer Richtung elastisch verformt wird. Die Spannmutter kann zu diesem Zweck beispielsweise als elastisch verformbares Blechumformteil gestaltet sein.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei der Endabschnitt der Nockenwelle mit einem zwischen der Stützfläche und dem Gewindeabschnitt angeordneten Verformungsabschnitt versehen ist, welcher so ausgebildet ist, dass er beim Anziehen der Spannmutter elastisch verformt wird. Auch diese Maßnahme ermöglicht eine in der industriellen Serienfertigung besonders einfache und kostengünstige Realisierung der erfindungsgemäßen Befestigungsanordnung, wobei die Spannmutter im verspannten Zustand durch den Verformungsabschnitt in axialer Richtung elastisch beaufschlagt wird. Der Verformungsabschnitt der Nockenwelle kann zu diesem Zweck beispielsweise eine geringere Wandstärke als hieran angrenzende Nockenwellenabschnitte aufweisen.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei das Abtriebsteil mit einem an die Spannmutter angrenzenden Verformungsabschnitt versehen ist, der so ausgebildet ist, dass er beim Anziehen der Spannmutter elastisch verformt wird. Auch diese Maßnahme ermöglicht eine in der industriellen Serienfertigung besonders einfache und kostengünstige Realisierung der erfindungsgemäßen Befestigungsanordnung, wobei die Spannmutter im verspannten Zustand durch den Verformungsabschnitt des Abtriebsteils in axialer Richtung elastisch beaufschlagt wird.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei der Endabschnitt der Nockenwelle mit einem zwischen der Stützfläche und dem Gewindeabschnitt angeordneten kegelstumpfförmigen Kegelabschnitt versehen ist, dem das Abtriebsteil aufsitzt, wobei zwischen der Spannmutter und dem Abtriebsteil ein die Reibung verstärkendes Reibelement, beispielsweise eine Reibscheibe, angeordnet ist. Durch diese Maßnahme kann in vorteilhafter Weise eine Entlastung der verspannten Spannmutter durch den Kegelabschnitt erreicht werden, was einem setzbedingten Lösen bzw. Lockern der Spannmutter entgegen wirkt. Eine weitere Sicherung gegen Lösen bzw. Lockern der Spannmutter wird durch das Reibelement erreicht.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei der Endabschnitt der Nockenwelle mit einem zwischen der Stützfläche und dem Gewindeabschnitt angeordneten kegelstumpfförmigen Kegelabschnitt versehen ist, dem das Abtriebsteil aufsitzt, wobei ein die Spannmutter und den Endabschnitt der Nockenwelle drehfest miteinander verbindendes Verbindungselement angeordnet ist. Durch diese Maßnahme kann in vorteilhafter Weise eine Entlastung der verspannten Spannmutter durch den Kegelabschnitt erreicht werden, was einem setzbedingten Lösen bzw. Lockern der Spannmutter entgegen wirkt. Eine weitere Sicherung gegen Lösen bzw. Lockern der Spannmutter wird durch das Verbindungselement erreicht.

Bei einer weiteren vorteilhaften Ausgestaltung der erfindungsgemäßen Befestigungsanordnung ist das Abtriebsteil mit einer von der Nockenwelle geformten Stützfläche durch die Spannmutter axial verspannt, wobei der Endabschnitt der Nockenwelle mit einem zwischen der Stützfläche und dem Gewindeabschnitt angeordneten kegelstumpfförmig ausgebildeten Kegelabschnitt versehen ist, dem das Abtriebsteil aufsitzt, wobei zwischen der Spannmutter und dem Abtriebsteil ein in einer Aufnahme des Abtriebsteils abschnittsweise aufgenommener Keilring angeordnet ist. Durch diese Maßnahme kann in vorteilhafter Weise eine Entlastung der verspannten Spannmutter durch den Kegelabschnitt erreicht werden, was einem setzbedingten Lösen bzw. Lockern der Spannmutter entgegen wirkt.

Es versteht sich, dass obige Ausgestaltungen der erfindungsgemäßen Befestigungsanordnung für sich allein oder in beliebigen Kombinationen vorgesehen sein können.

In obigen Ausgestaltungen der Erfindung kann es von Vorteil sein, wenn der Stellmechanismus ein in einem Hohlraum des Endabschnitts der Nockenwelle aufgenommenes hydraulisches Steuerventil mit einem Ventilgehäuse und einem darin axial verschiebbar aufgenommenen Steuerkolben umfasst, wobei das Ventilgehäuse durch einen in einer Ringnut des Endabschnitts aufgenommenen Sicherungsring axial gesichert ist.

In obigen Ausgestaltungen der Erfindung kann es weiterhin von Vorteil sein, wenn der Stellmechanismus ein in einem Hohlraum des Endabschnitts der Nockenwelle aufgenommenes hydraulisches Steuerventil mit einem Ventilgehäuse und einem darin axial verschiebbar aufgenommenen Steuerkolben umfasst, wobei das Ventilgehäuse durch einen an die Spannmutter angeformten radialen Kragen axial gesichert ist.

Ein weiterer Aspekt der Erfindung betrifft eine Befestigungsanordnung eines Nockenwellenverstellers mit einem mit einer Kurbelwelle in Antriebsverbindung bringbaren Antriebsteil, einem drehverstellbar zum Antriebsteil gelagerten Abtriebsteil, sowie einem hydraulischen Stellmechanismus, durch den eine Drehwinkelstellung zwischen An- und Abtriebsteil verstellbar ist. Hierbei ist das Abtriebsteil mit einer von einem Endabschnitt der Nockenwelle durchsetzten, zentralen Axialöffnung versehen ist, wobei das Abtriebsteil mit der Nockenwelle verschweißt ist. Zudem umfasst der hydraulische Stellmechanismus ein in einem Hohlraum des Endabschnitts der Nockenwelle aufgenommenes Steuerventil mit einem Ventilgehäuse und einem darin axial verschiebbar aufgenommenen Steuerkolben, wobei das Ventilgehäuse durch einen in einer Ringnut des Endabschnitts aufgenommenen Sicherungsring axial gesichert ist. Dieser Aspekt der Erfindung ermöglicht gleichermaßen eine zuverlässige und sichere drehfeste Verbindung des Abtriebsteils mit dem Nockenwellenversteller.

Die Erfindung erstreckt sich weiterhin auf eine Brennkraftmaschine, die mit wenigstens einer wie oben beschriebenen Befestigungsanordnung für einen Nockenwellenversteller versehen ist.

### Kurze Beschreibung der Zeichnungen

Die Erfindung wird nun anhand mehrerer Ausführungsbeispiele näher erläutert, wobei Bezug auf die beigefügten Zeichnungen genommen wird. Gleiche bzw. gleich wirkende Elemente sind in den Zeichnungen mit denselben Bezugszahlen bezeichnet. Es zeigen:
- Fig. 1: eine Radialschnittansicht eines Ausführungsbeispiels der erfindungsgemäßen Befestigungsanordnung, bei welcher ein elastisch verformbarer Körper an die Spannmutter angeformt ist;
- Fig. 2: zwei Ausführungsbeispiele der Spannmutter der Befestigungsanordnung von Fig. 1;
- Fig. 3: eine Radialschnittansicht eines weiteren Ausführungsbeispiels der erfindungsgemäßen Befestigungsanordnung, bei welcher ein elastisch verformbarer Körper an die Spannmutter angeformt ist;
- Fig. 4: eine Radialschnittansicht eines weiteren Ausführungsbeispiels der erfindungsgemäßen Befestigungsanordnung, bei welcher die Spannmutter als elastisch verformbarer Körper ausgebildet ist;
- Fig. 5: eine Radialschnittansicht eines weiteren Ausführungsbeispiels der erfindungsgemäßen Befestigungsanordnung, bei welcher die Nockenwelle mit einem elastisch verformbaren Abschnitt versehen ist;
- Fig. 6: eine Radialschnittansicht eines weiteren Ausführungsbeispiels der erfindungsgemäßen Befestigungsanordnung, bei welcher der Innenrotor mit einem elastisch verformbaren Abschnitt versehen ist;
- Fig. 7: eine Radialschnittansicht eines weiteren Ausführungsbeispiels der erfindungsgemäßen Befestigungsanordnung, bei welcher die Nockenwelle mit einem kegelstumpfförmigen Abschnitt versehen ist;
- Fig. 8A-8B: eine Radialschnittansicht (Fig. 8A) sowie eine axiale Vorderansicht (Fig. 8B) eines weiteren Ausführungsbeispiels der erfindungsgemäßen Befestigungsanordnung, bei welcher die Nockenwelle mit einem kegelstumpfförmigen Abschnitt versehen ist;
- Fig. 9: eine Radialschnittansicht eines weiteren Ausführungsbeispiels der erfindungsgemäßen Befestigungsanordnung, bei welcher ein mit einer Spannmutter zusammenwirkender Keilring vorgesehen ist;
- Fig. 10: eine Radialschnittansicht einer erfindungsgemäßen Befestigungsanordnung, bei welcher das Abtriebsteil mit der Nockenwelle verschweißt ist.

### Ausführliche Beschreibung der Zeichnungen

In den Figuren sind verschiedene Ausführungsbeispiele der erfindungsgemäßen Befestigungsanordnung mit einem Rotationskolbenverstellers zur Verstellung einer relativen Drehwinkellage zwischen Kurbel- und Nockenwelle schematisch dargestellt.

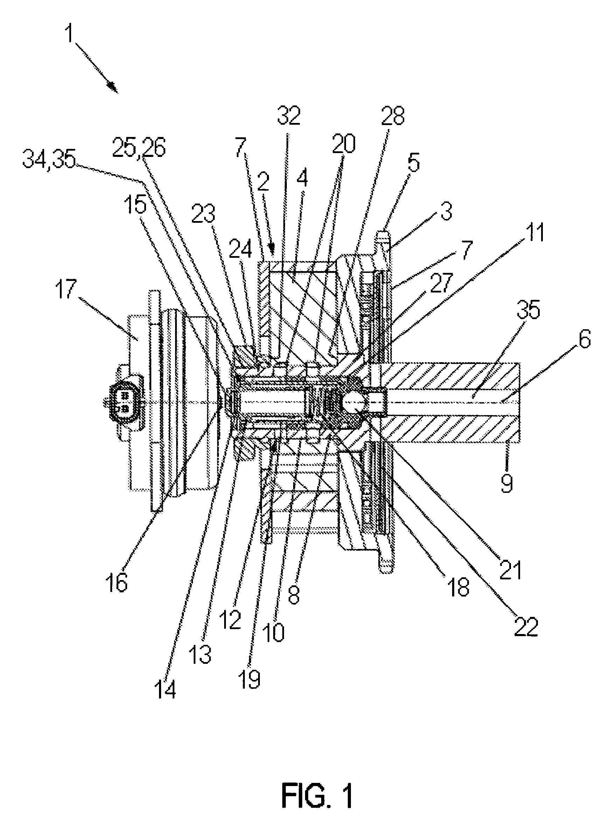

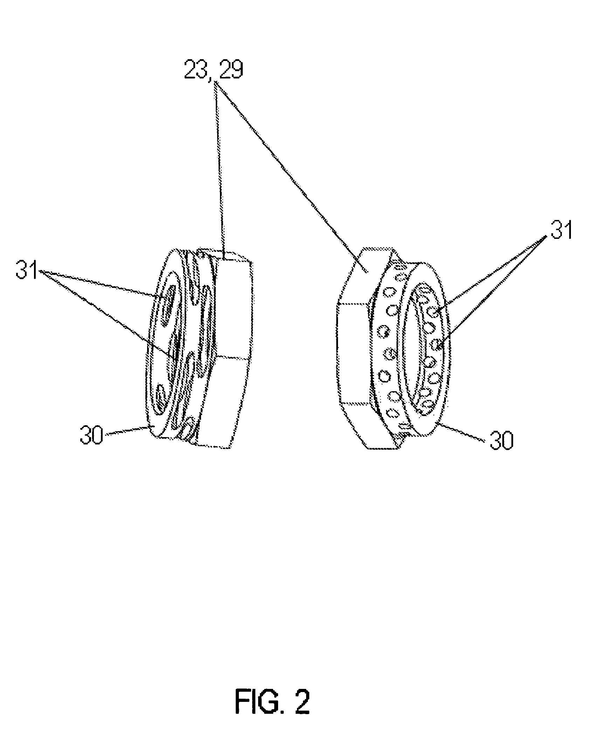

Seien zunächst die Figuren 1 und 2 betrachtet, worin ein Ausführungsbeispiel der erfindungsgemäßen Befestigungsanordnung veranschaulicht ist. Demnach umfasst die insgesamt mit der Bezugszahl 1 bezeichnete Befestigungsanordnung einen hydraulischen Rotationskolbenversteller 2, der als Antriebsteil einen mit einer (nicht dargestellten) Kurbelwelle über ein Zahnrad 5 und einen (nicht dargestellten) Zahntrieb in Antriebsverbindung bringbaren Außenrotor 3 und als Abtriebsteil einen zum Außenrotor 3 drehverstellbar angeordneten Innenrotor 4 aufweist, wobei Außen- und Innenrotor konzentrisch um eine gemeinsame Drehachse 6 angeordnet sind. Im radialen Zwischenraum zwischen Außen- und Innenrotor sind eine Mehrzahl Druckräume geformt, in die sich jeweils ein mit dem Innenrotor 4 verbundener Flügel erstreckt, wodurch jeder Druckraum in ein Paar gegeneinander wirkender Druckkammern geteilt wird. Durch gezielte Druckbeaufschlagung der beispielsweise in Antriebsrichtung des Innenrotors 4 vorauseilenden Druckkammern (Druckkammern "B") oder der in entsprechender Weise nacheilenden Druckkammern (Druckkammern "A") kann eine Drehwinkellage zwischen Innenrotor 4 und Außenrotor 3 verstellt werden. Gleichermaßen kann eine gewünschte Drehwinkellage beispielsweise durch hydraulisches Verspannen der Flügel in den Druckräumen gehalten werden. Die genaue Funktionsweise eines solchen hydraulischen Rotationskolbenverstellers 2 ist dem Fachmann, beispielsweise aus den eingangs genannten Druckschriften, hinlänglich bekannt, so dass hier nicht näher darauf eingegangen werden muss.

Der Außenrotor 3 formt ein druckdichtes Gehäuse für den Innenrotor 4, wobei die Druckräume bzw. Druckkammern durch stirnseitig angeordnete Seitenbauteile 7 axial druckdicht verschlossen sind. Der Außenrotor 4 ist mit den beiden Seitenbauteilen 7 durch axiale Befestigungsschrauben verschraubt, was in Fig. 1 nicht näher dargestellt ist.

Der Innenrotor 4 und die beiden Seitenbauteile 7 sind mit einer zentralen Axialöffnung 8 versehen, die von einem Endabschnitt 10 einer Nockenwelle 9 durchsetzt wird. Dabei sitzt der Innenrotor 10 der Nockenwelle 9 in Spielpassung auf. Der Endabschnitt 10 ist mit einem Hohlraum 11 versehen, in dem ein insgesamt mit der Bezugszahl 12 bezeichnetes hydraulisches Steuerventil zur Regelung von Druckmittelströmen aufgenommen ist. Das Steuerventil 12 umfasst ein hohlzylindrisches Ventilgehäuse 13, in dem ein als Hohlkolben ausgebildeter Steuerkolben 14 axial verschiebbar aufgenommen ist. An der in Fig. 1 linken Stirnfläche 15 des Steuerkolbens 14 greift ein Ventilstößel 16 an, der an einem (nicht dargestellten) Magnetanker eines Elektromagneten 17 starr befestigt ist. Wenn der Magnetanker bestromt wird, wird der Ventilstößel 16 axial versetzt und verstellt hierbei den Steuerkolben 14 in axialer Richtung entgegen der Federkraft einer Schraubendruckfeder 18. Wird der Magnetanker nicht bestromt, stellt die Schraubendruckfeder 18 den Steuerkolben 14 in seine Ausgangslage zurück (in Fig. 1 nach links). Das Ventilgehäuse 13, der Ventilstößel 16 und eine das Ventilgehäuse 13 umgebende Hülse 19 sind mit einer Reihe von Nuten und Öffnungen versehen, um mit den Druckkammern kommunizierende Druckmittelanschlüsse 20 des Innenrotors 4 in gewünschter Weise je nach Stellung des Steuerkolbens 14 mit Druckmittel zu versorgen bzw. hiervon Druckmittel abzuleiten. Als Druckmittel wird in der Regel Öl des Schmierkreislaufs verwendet, das über Druckmittelkanäle 35 zugeführt werden kann. Auf die genaue Funktionsweise des Steuerventils 12 muss hier nicht näher eingegangen werden.

Eine Lagesicherung des Steuerventils 12 erfolgt durch einen im Hohlraum 11 in einer Ringnut 34 aufgenommenen Sicherungsring 33. Der Sicherungsring 33 bildet gleichzeitig einen axialen Anschlag für den Steuerkolben 14.

Lediglich ergänzend sei noch darauf hingewiesen, dass das Steuerventil 12 mit einem Rückschlagventil 21 versehen ist, durch das ein Leerlaufen der Druckmittelpfade beim Abstellen der Brennkraftmaschine und ein Einleiten von Druckspitzen und Pulsationen aufgrund von Wechselmomenten der Nockenwelle in den Ölkreislauf verhindert werden kann.

In Fig. 1 ist weiterhin eine Spiralfeder 22 erkennbar, durch die Außen- und Innenrotor 3, 4 beim Abstellen der Brennkraftmaschine entgegen der Reibmomente der Nockenwelle in eine zum Starten der Brennkraftmaschine günstige thermodynamische Phasenlage (Basisposition) gebracht werden können.

Eine drehfeste Verbindung des Innenrotors 4 mit der Nockenwelle 9 erfolgt durch axiales Verspannen mittels einer Spannmutter 23. Zu diesem Zweck ist ein Gewindeabschnitt 24 des Endabschnitts 10 der Nockenwelle 9 mit einem Außengewinde 25 versehen, das mit dem Innengewinde 26 der Spannmutter 23 verschraubt ist. Zum axialen Verspannen wird der Innenrotor 4 durch die Spannmutter 23 gegen eine von einer ringförmigen Schulter 27 der Nockenwelle 9 geformte Stützfläche 28 gedrückt.

Wie insbesondere Fig. 2 entnommen werden kann, ist an die Spannmutter 23 bzw. einen das Innengewinde 26 tragenden, in Form eines Mehrkants ausgebildeten Kopfteil 29 ein ringförmiger Ringteil 30 angeformt und fest mit dem Kopfteil 29 verbunden. Der Ringteil 30 ist hier beispielsweise aus Federstahl gefertigt. Er ist mit einer Vielzahl runder oder beispielsweise ovaler Durchbrechungen 31 versehen, durch die der Ringteil 30 eine gewisse elastische Verformbarkeit in axialer Richtung erlangt.

Wird die Spannmutter 23 auf den Gewindeabschnitt 24 geschraubt, gelangt der Ringteil 30 zur Anlage gegen eine stirnseitige Kontaktfläche 32 des Innenrotors 4, wodurch dieser gegen die Stützfläche 28 gedrückt wird. Dabei wird der Ringteil 30 elastisch komprimiert. Setzt sich der Schraubverband im Laufe der Zeit, so kann der elastisch komprimierte Ringteil 30 diesen Setzverlust ausgleichen, so dass ein Lösen bzw. Lockern der Spannmutter 23 verhindert wird.

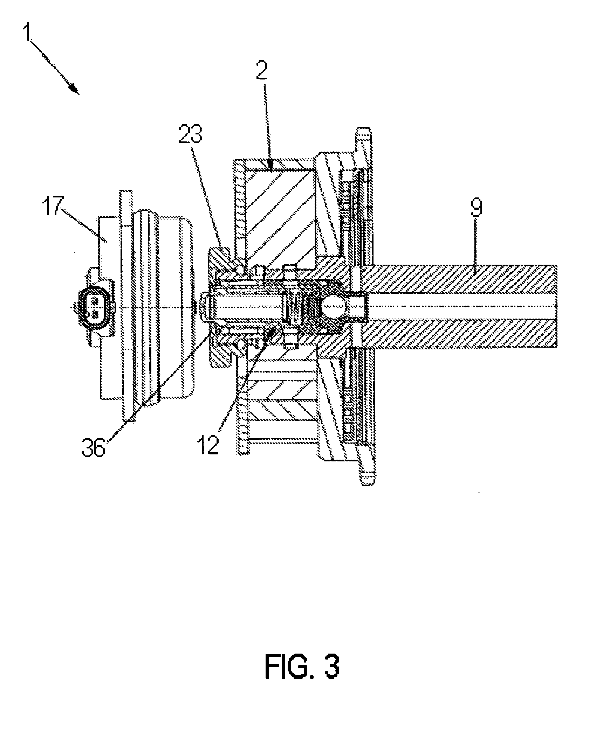

Es wird nun Bezug auf Fig. 3 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und 2 veranschaulichten Ausführungsbeispiel erläutert und ansonsten auf die dort Ausführungen Bezug genommen.

Demnach ist die Spannmutter 23 mit einem radial nach innen gerichteten Kragen 36 versehen, der anstelle eines Sicherungsrings zu axialen Lagesicherung des Steuerventils 12 dient. Der Kragen 36 dient gleichzeitig als axialer Anschlag für den Steuerkolben 14.

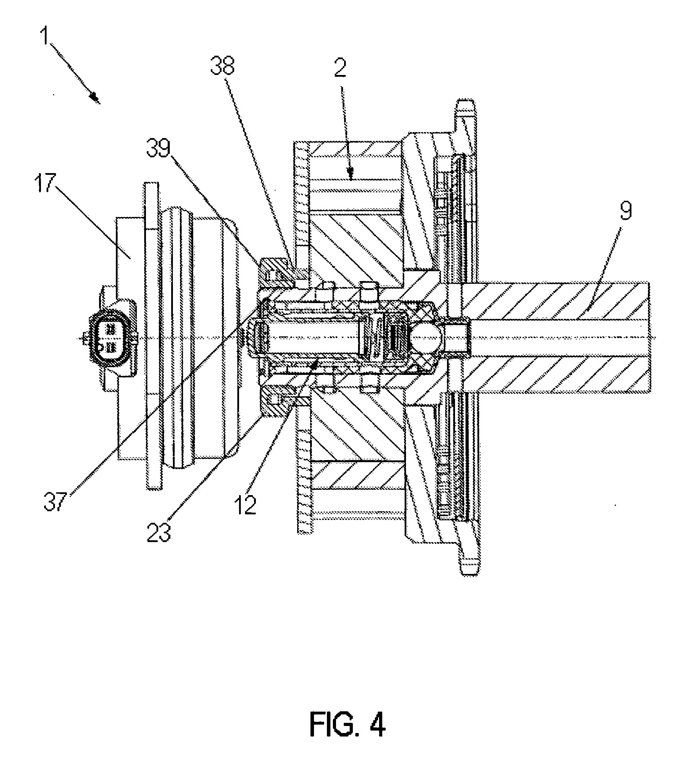

Es wird nun Bezug auf Fig. 4 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und 2 veranschaulichten Ausführungsbeispiel erläutert und ansonsten auf die dort Ausführungen Bezug genommen.

Demnach ist die Spannmutter 23 als Blechumformteil ausbildet und kann beim axialen Verspannen elastisch verformt werden. Sie umfasst zu diesem Zweck einen axialen Ringabschnitt 37, der das Innengewinde 26 trägt und über einen radialen Übergangsabschnitt 39 mit einem Stützabschnitt 38 verbunden ist. Wird die Spannmutter 23 auf das Außengewinde 25 des Gewindeabschnitts 24 geschraubt, gelangt der Stützabschnitt 38 zur Anlage gegen die Kontaktfläche 32, so dass er beim weiteren Anziehen der Spannmutter 23 unter elastischer Verformung der Spannmutter 23 relativ zum Ringabschnitt 37 bewegt wird. Setzt sich der Schraubverband im Laufe der Zeit, so kann die elastische verformbare Spannmutter 23 diesen Setzverlust ausgleichen, so dass ein Lösen bzw. Lockern der Spannmutter 23 verhindert wird.

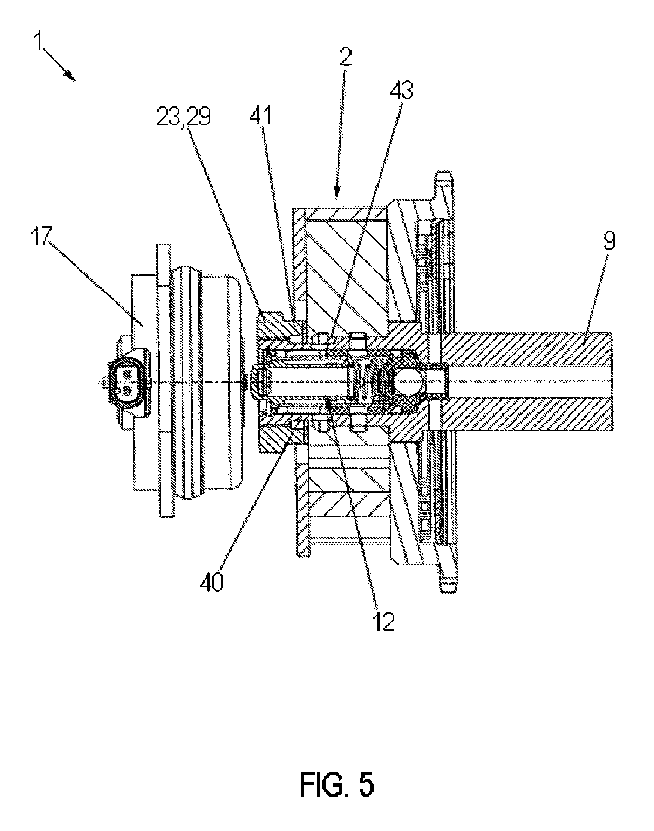

Es wird nun Bezug auf Fig. 5 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und 2 veranschaulichten Ausführungsbeispiel erläutert und ansonsten auf die dort Ausführungen Bezug genommen.

Demnach ist die Spannmutter 23 nicht mit einem elastisch verformbaren Ringteil 30 verbunden. Anstelle dessen ist an den Kopfteil 29 ein starr mit diesem verbundener starrer Spannmutterkragen 41 angeformt. Der Spannmutterkragen 41 liegt mit seiner Stirnfläche über eine Reibscheibe 42 an der Kontaktfläche 32 an. Die Reibscheibe 42 dient dazu, ein Lösen bzw. Lockern der Spannmutter 23 zu hemmen. In dieser Ausführungsform ist der Endabschnitt 10 der Nockenwelle 9 im Bereich zwischen dem Gewindeabschnitt 24 und der Stützfläche 28 mit einem (Nockenwelle-)Verformungsabschnitt 40 versehen. Der Verformungsabschnitt 40 wird durch eine außen umlaufende (Nockenwelle-)Ringnut 43 geformt, die durch die Verringerung der Wandstärke zu einer Schwächung des Endabschnitts 10 führt. Wird die Spannmutter 23 auf das Außengewinde 25 des Gewindeabschnitts 24 geschraubt, gelangt der Spannmutterkragen 41 mit seiner Stirnfläche zur Anlage gegen die Kontaktfläche 32 des Innenrotors 4. Beim weiteren Anziehen der Spannmutter 23 wird der Verformungsabschnitt 40 der Nockenwelle 9 infolge des axialen Verspannens der Anordnung elastisch gedehnt. Setzt sich der Schraubverband im Laufe der Zeit, kann der elastische verformbare Verformungsabschnitt 40 diesen Setzverlust (durch Zusammenziehen) ausgleichen, so dass ein Lösen bzw. Lockern der Spannmutter 23 verhindert wird.

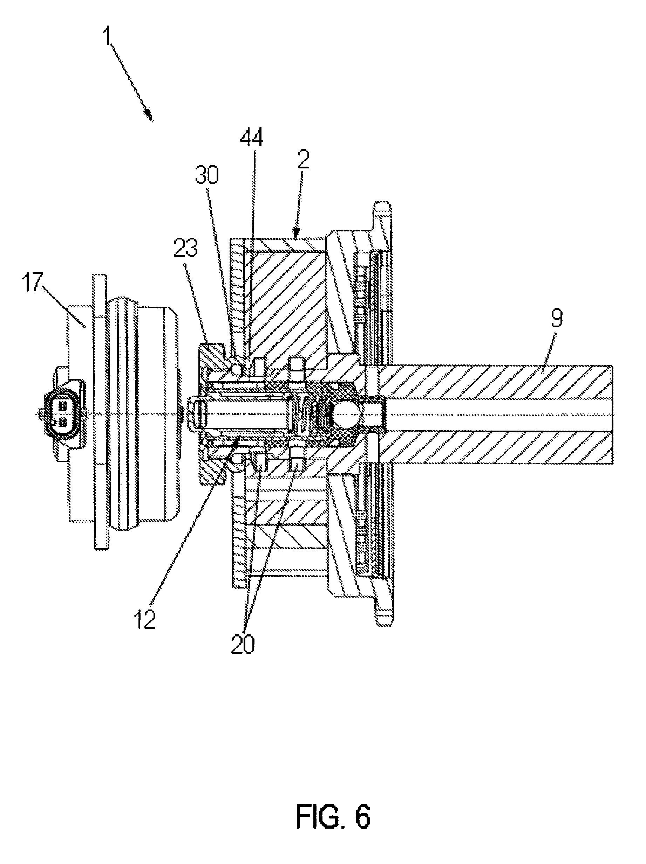

Es wird nun Bezug auf Fig. 6 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und 2 veranschaulichten Ausführungsbeispiel erläutert und ansonsten auf die dort Ausführungen Bezug genommen.

Demnach ist ein Bereich des Innenrotors 4, welcher dem Ringteil 30 angrenzt und die Kontaktfläche 32 formt, im Weiteren als (Innenrotor-)Verformungsabschnitt 44 bezeichnet, elastisch verformbar ausgebildet. In dem gezeigten Ausführungsbeispiel wird der Verformungsabschnitt 44 durch eine vergrößerte Tiefe des als Ringnut ausgebildeten und an die Kontaktfläche 32 angrenzenden Druckmittelanschlusses 20 geformt. Wird die Spannmutter 23 auf das Außengewinde 25 des Gewindeabschnitts 24 geschraubt, gelangt der Ringteil 30 mit seiner Stirnfläche zur Anlage gegen die Kontaktfläche 32 des Innenrotors 4. Beim weiteren Anziehen der Spannmutter 23 wird der Verformungsabschnitt 44 des Innenrotors 4 infolge des axialen Verspannens der Anordnung elastisch komprimiert. Setzt sich der Schraubverband im Laufe der Zeit, kann der elastische verformbare Verformungsabschnitt 44 diesen Setzverlust (durch Zusammenziehen) ausgleichen, so dass ein Lösen bzw. Lockern der Spannmutter 23 verhindert wird.

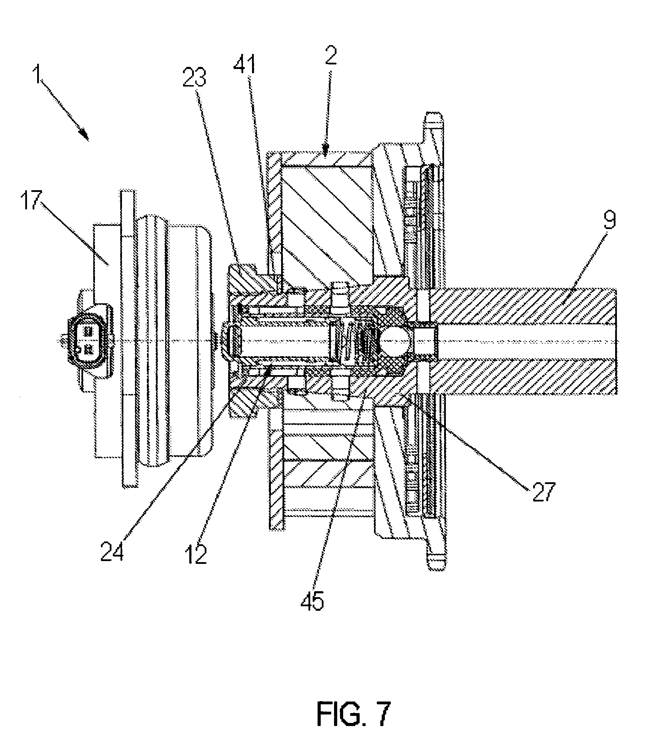

Es wird nun Bezug auf Fig. 7 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 5 veranschaulichten Ausführungsbeispiel erläutert und ansonsten auf die dort Ausführungen Bezug genommen.

Demnach ist der Endabschnitt 10 anstelle eines Verformungsabschnitts 40 zwischen dem Gewindeabschnitt 24 und der Stützfläche 28 mit einem kegelstumpfförmigen Kegelabschnitt 45 versehen. Die Axialöffnung 8 des Innenrotors 4 ist hierzu in Passform ausgebildet. Wird die Spannmutter 23 auf das Außengewinde 25 des Gewindeabschnitts 24 geschraubt, gelangt der Spannmutterkragen 41 mit seiner Stirnfläche zur Anlage gegen die Kontaktfläche 32 des Innenrotors 4. Beim weiteren Anziehen der Spannmutter 23 wird der Innenrotor 4 gegen die Stützfläche 28 gedrückt. Zudem wird der Innenrotor 8 an der Axialöffnung 8 mit dem Kegelabschnitt 45 axial und radial verspannt. Hierdurch wird die Spannmutter 23 entlastet, wodurch einem Setzen des Schraubverbands entgegengewirkt wird.

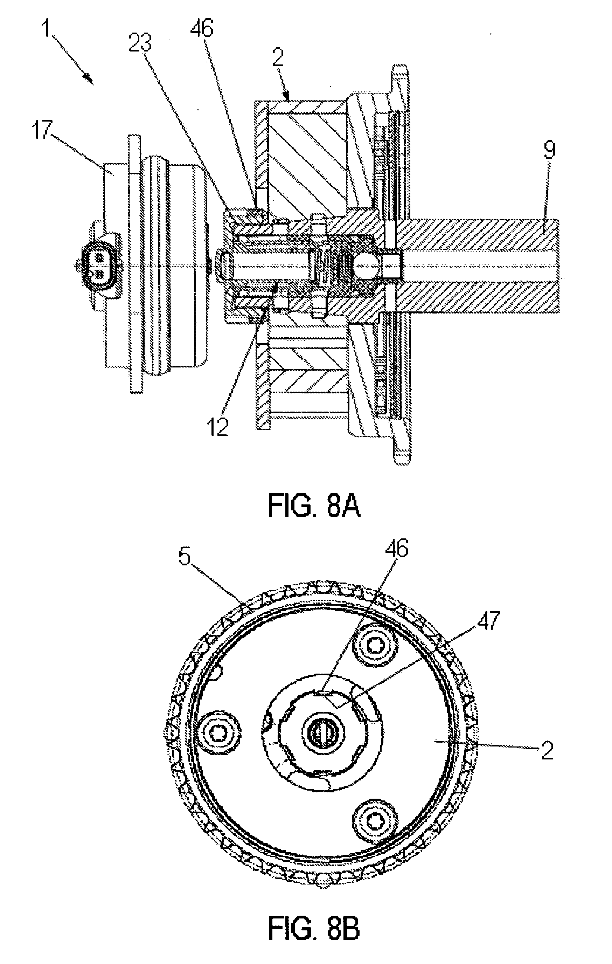

Es wird nun Bezug auf Fig. 8 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 7 veranschaulichten Ausführungsbeispiel erläutert und ansonsten auf die dort Ausführungen Bezug genommen.

Demnach sind um den Umfang verteilte Befestigungslaschen 46 vorgesehen, die sowohl mit dem Endabschnitt 10 der Nockenwelle 9 als auch mit der Spannmutter 23 drehfest verbunden sind. Zu diesem Zweck sind die Befestigungslaschen 46 jeweils mit einem Ende in Nuten des Endabschnitts 10 aufgenommen, welche in FIG. 8 nicht näher dargestellt sind. Mit ihrem anderen Ende sind die Befestigungslaschen 46 in Laschenaufnahmen 47 der Spannmutter 23 aufgenommen. Die Befestigungslaschen 46 können nach dem Anziehen der Spannmutter 23 in einfacher Weise durch Umbiegen in die Lauschenaufnahmen 47 eingebracht werden. Durch die die Spannmutter 23 und die Nockenwelle 9 drehfest miteinander verbindenden Befestigungslaschen 46 wird einem Lösen bzw. Lockern der Spannmutter 23 entgegengewirkt.

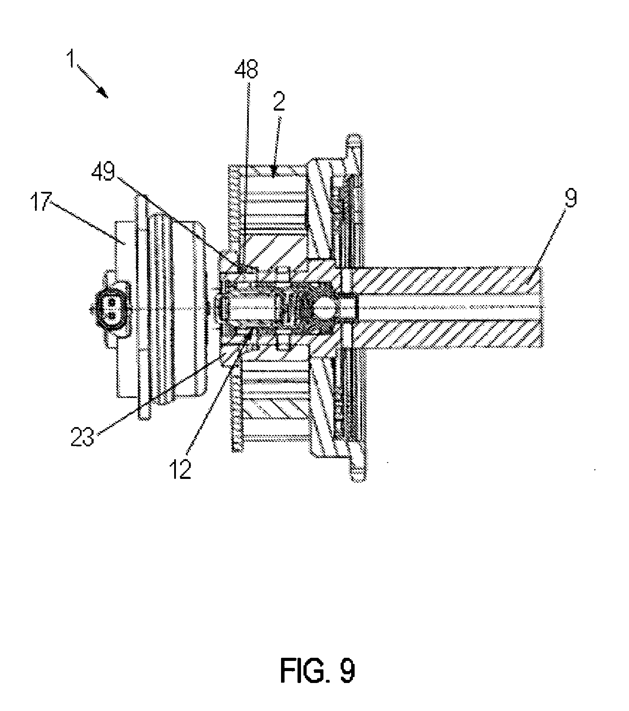

Es wird nun Bezug auf Fig. 9 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und Fig. 2 veranschaulichten Ausführungsbeispiel erläutert und ansonsten auf die dort Ausführungen Bezug genommen.

Demnach ist die Spannmutter 23 lediglich als Kopfteil 29 geformt. In einer im Bereich der Kontaktfläche 32 vom Innenrotor 4 geformten Keilnut 48 ist ein elastisch verformbarer Keilring 49 teilweise (abschnittsweise) aufgenommen. Wird die Spannmutter 23 auf das Außengewinde 25 des Gewindeabschnitts 24 geschraubt, gelangt eine Stirnfläche des Kopfteils 29 zur Anlage gegen den Keilring 49, so dass dieser beaufschlagt wird. Setzt sich der Schraubverband im Laufe der Zeit, so kann der Keilring 49 diesen Setzverlust (durch Zusammenziehen) ausgleichen, so dass ein Lösen bzw. Lockern der Spannmutter 23 verhindert wird. Zudem wird einem Lockern des Schraubverbands durch die Reibeigenschaften des Keilrings 49 entgegen gewirkt.

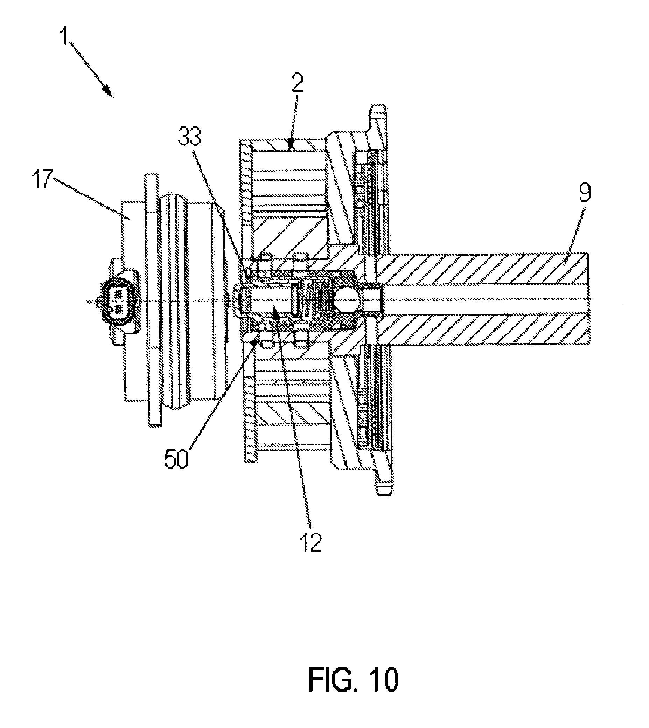

Es wird nun Bezug auf Fig. 10 genommen, worin anhand einer Radialschnittansicht ein weiteres Ausführungsbeispiel der erfindungsgemäßen Befestigungsanordnung gezeigt ist. Um unnötige Wiederholungen zu vermeiden, werden lediglich die Unterschiede zu dem in Fig. 1 und Fig. 2 veranschaulichten Ausführungsbeispiel erläutert und ansonsten auf die dort führungsbeispiel erläutert und ansonsten auf die dort Ausführungen Bezug genommen.

Demnach ist der Innenrotor 4 nicht durch eine Spannmutter mit der Nockenwelle 9 axial verspannt, sondern durch einen umlaufende Schweißnaht 50 mit dem Endabschnitt 10 der Nockenwelle 9 verschweißt. Das Steuerventil 12 ist durch den im Hohlraum 11 in einer Ringnut 34 aufgenommenen Sicherungsring 33 axial gesichert.

Die erfindungsgemäße Befestigungsanordnung ermöglicht somit in vorteilhafter Weise, dass einem Lösen bzw. Lockern der Spannmutter eines zentralen Schraubverbands zum axialen Verspannen des Nockenwellenverstellers mit der Nockenwelle wirksam entgegengewirkt wird, um insbesondere eine genaue Positionierung des Abtriebsteils zur Nockenwelle sicherzustellen. Die oben im Zusammenhang mit den verschiedenen Ausführungsbeispielen erläuterten Maßnahmen zum Erreichen dieses Ziels können für sich allein oder in beliebigen Kombinationen realisiert sein.

### Bezugszeichenliste

- 1.: Befestigungsanordnung
- 2.: Rotationskolbenversteller
- 3.: Außenrotor
- 4.: Innenrotor
- 5.: Zahnrad
- 6.: Drehachse
- 7.: Seitenbauteil
- 8.: Axialöffnung
- 9.: Nockenwelle
- 10.: Endabschnitt
- 11.: Hohlraum
- 12.: Steuerventil
- 13.: Ventilgehäuse
- 14.: Steuerkolben
- 15.: Stirnfläche
- 16.: Ventilstößel
- 17.: Elektromagnet
- 18.: Schraubendruckfeder
- 19.: Hülse
- 20.: Druckmittelanschluss
- 21.: Rückschlagventil
- 22.: Spiralfeder
- 23.: Spannmutter
- 24.: Gewindeabschnitt
- 25.: Außengewinde
- 26.: Innengewinde
- 27.: Schulter
- 28.: Stützfläche
- 29.: Kopfteil
- 30.: Ringteil
- 31.: Durchbrechung
- 32.: Kontaktfläche
- 33.: Sicherungsring
- 34.: Ringnut
- 35.: Druckmittelkanal
- 36.: Kragen
- 37.: Ringabschnitt
- 38.: Stützabschnitt
- 39.: Übergangsabschnitt
- 40.: (Nockenwelle-)Verformungsabschnitt
- 41.: Spannmutterkragen
- 42.: Reibscheibe
- 43.: (Nockenwelle-)Ringnut
- 44.: (Innenrotor-)Verformungsabschnitt
- 45.: Kegelabschnitt
- 46.: Befestigungslasche
- 47.: Laschenaufnahme
- 48.: Keilnut
- 49.: Keilring
- 50.: Schweißnaht

## Patentansprüche

1. Befestigungsanordnung (1) zur Befestigung eines Nockenwellenverstellers (2) an einer Nockenwelle (9), mit einem mit einer Kurbelwelle in Antriebsverbindung bringbaren Antriebsteil (3), einem mit der Nockenwelle (9) drehfest verbundenen Abtriebsteil (4), das drehverstellbar zum Antriebsteil (3) gelagert ist, sowie einem Stellmechanismus, durch den eine Drehwinkelstellung zwischen An- und Abtriebsteil (3, 4) verstellbar ist, wobei
- das Abtriebsteil (4) mit einer von einem Endabschnitt (10) der Nockenwelle (9) durchsetzten, zentralen Axialöffnung (8) versehen ist,
- der Endabschnitt (10) einen gewindetragenden Gewindeabschnitt (24) aufweist, der mit einer das Abtriebsteil (4) beaufschlagenden Spannmutter (23) so verschraubt ist, dass das Abtriebsteil (4) und die Nockenwelle (9) mit einer von der Nockenwelle (9) geformten Stützfläche (28) zu deren drehfesten Verbindung axial verspannt sind,
- die Spannmutter (23) in axialer Richtung elastisch beaufschlagt ist, so dass einem Lockern der Spannmutter (23) entgegengewirkt wird
wobei zwischen der das Abtriebsteil (4) beaufschlagenden Spannmutter (23) und dem Abtriebsteil ein elastisch verformbarer Körper (30) angeordnet ist,
**dadurch gekennzeichnet, dass**
der elastisch verformbare Körper (30) aus Federstahl hergestellt ist.

2. Befestigungsanordnung (1) nach Anspruch 1, **dadurch gekennzeichnet, dass** der elastisch verformbare Körper (30) mit der Spannmutter (23) fest ver-bunden ist.

3. Befestigungsanordnung (1) nach Anspruch 1, **dadurch gekennzeichnet, dass** das Abtriebsteil (4) mit einer von der Nockenwelle (9) geformten Stützfläche (28) durch die Spannmutter (23) axial verspannt ist, wobei die Spannmutter (23) selbst als elastisch verformbarer Körper ausgebildet ist.

4. Befestigungsanordnung (1) nach Anspruch 3, **dadurch gekennzeichnet, dass** die Spannmutter (23) ein Blechumformteil ist.

5. Befestigungsanordnung (1) nach Anspruch 1, **dadurch gekennzeichnet, dass** der Endabschnitt (10) der Nockenwelle (9) mit einem zwischen der Stützfläche (28) und dem Gewindeabschnitt (24) angeordneten Verformungsabschnitt (40) versehen ist, welcher so ausgebildet ist, dass er beim Anziehen der Spannmutter (23) elastisch verformt wird.

6. Befestigungsanordnung (1) nach Anspruch 5, **dadurch gekennzeichnet, dass** der Verformungsabschnitt (40) der Nockenwelle (9) eine geringere Wandstärke als hieran angrenzende Nockenwellenabschnitte aufweist.

7. Befestigungsanordnung (1) nach Anspruch 1, **dadurch gekennzeichnet, dass** das Abtriebsteil (4) mit einem an die Spannmutter (23) angrenzenden Verformungsabschnitt (44) versehen ist, der so ausgebildet ist, dass er beim Anziehen der Spannmutter (23) elastisch verformt wird.

8. Befestigungsanordnung (1) nach Anspruch 1, **dadurch gekennzeichnet, dass** der Endabschnitt (10) der Nockenwelle mit einem zwischen der Stützfläche (28) und dem Gewindeabschnitt (24) angeordneten kegelstumpfförmigen Kegelabschnitt (45) versehen ist, dem das Abtriebsteil (4) aufsitzt, wobei zwischen der Spannmutter (23) und dem Abtriebsteil (4) ein die Reibung verstärkendes Reibelement (42) angeordnet ist.

9. Befestigungsanordnung (1) nach Anspruch 1, **dadurch gekennzeichnet, dass** der Endabschnitt (10) der Nockenwelle (9) mit einem zwischen der Stützfläche (28) und dem Gewindeabschnitt (24) angeordneten kegelstumpfförmigen Kegelabschnitt (45) versehen ist, dem das Abtriebsteil (4) aufsitzt, wobei ein die Spannmutter (23) und den Endabschnitt (10) der Nockenwelle (9) drehfest miteinander verbindendes Verbindungselement (46) angeordnet ist.

10. Befestigungsanordnung (1) nach Anspruch 1, **dadurch gekennzeichnet, dass** der Endabschnitt (10) der Nockenwelle mit einem zwischen der Stützfläche (28) und dem Gewindeabschnitt (24) angeordneten kegelstumpfförmig ausgebildeten Kegelabschnitt (45) versehen ist, dem das Abtriebsteil (4) aufsitzt, wobei zwischen der Spannmutter (23) und dem Abtriebsteil (4) ein in einer Aufnahme (48) des Abtriebsteils (4) abschnittsweise aufgenommener Keilring (49) angeordnet ist.

11. Befestigungsanordnung (1) nach einem der Ansprüche 1 bis 10, **dadurch gekennzeichnet, dass** der Stellmechanismus ein in einem Hohlraum (11) des Endabschnitts (10) der Nockenwelle (9) aufgenommenes hydraulisches Steuerventil (12) mit einem Ventilgehäuse (13) und einem darin axial verschiebbar aufgenommenen Steuerkolben (14) umfasst, wobei das Ventilgehäuse (13) durch einen in einer Ringnut (34) des Endabschnitts (10) aufgenomme-nen Sicherungsring (33) axial gesichert ist.

12. Befestigungsanordnung (1) nach einem der Ansprüche 1 bis 10, **dadurch gekennzeichnet, dass** der Stellmechanismus ein in einem Hohlraum (11) des Endabschnitts (10) der Nockenwelle (9) aufgenommenes hydraulisches Steuerventil (12) mit einem Ventilgehäuse (13) und einem darin axial ver-schiebbar aufgenommenen Steuerkolben (14) umfasst, wobei das Ventilgehäuse (13) durch einen radialen Kragen (36) der Spannmutter (23) axial gesichert ist.

## Claims

1. Fastening arrangement (1) for fastening a camshaft phaser (2) to a camshaft (9), with a drive part (3) capable of being brought into drive connection with a crankshaft, with a driven part (4) connected fixedly in terms of rotation to the camshaft (9) and mounted rotationally adjustably with respect to the drive part (3), and with an actuating mechanism, by means of which a rotary angle position between the drive part and driven part (3, 4) can be adjusted,
- the driven part (4) being provided with a central axial orifice (8) through which passes an end portion (10) of the camshaft (9),
- the end portion (10) having a thread-carrying threaded portion (24) which is screwed to a tension nut (23) loading the driven part (4), such that the driven part (4) and the camshaft (9) are braced axially, by means of a supporting face (28) formed by the camshaft (9), for their rotationally fixed connection,
- the tension nut (23) being loaded elastically in the axial direction, so that loosening of the tension nut (23) is counteracted,
an elastically deformable body (30) being arranged between the tension nut (23) loading the driven part (4) and the driven part,
**characterized in that**
the elastically deformable body (30) is produced from spring steel.

2. Fastening arrangement (1) according to Claim 1, **characterized in that** the elastically deformable body (30) is connected fixedly to the tension nut (23).

3. Fastening arrangement (1) according to Claim 1, **characterized in that** the driven part (4) is braced axially by the tension nut (23) by means of a supporting face (28) formed by the camshaft (9), the tension nut (23) itself being designed as an elastically deformable body.

4. Fastening arrangement (1) according to Claim 3, **characterized in that** the tension nut (23) is a sheet-metal formed part.

5. Fastening arrangement (1) according to Claim 1, **characterized in that** that end portion (10) of the camshaft (9) is provided with a deformation portion (40) which is arranged between the supporting face (28) and the threaded portion (24) and which is designed such that it is deformed elastically when the tension nut (23) is tightened.

6. Fastening arrangement (1) according to Claim 5, **characterized in that** the deformation portion (40) of the camshaft (9) has a smaller wall thickness than camshaft portions adjacent to it.

7. Fastening arrangement (1) according to Claim 1, **characterized in that** the driven part (4) is provided with a deformation portion (44) which is adjacent to the tension nut (23) and which is designed such that it is deformed elastically when the tension nut (23) is tightened.

8. Fastening arrangement (1) according to Claim 1, **characterized in that** the end portion (10) of the camshaft is provided with a frustoconical taper portion (45) which is arranged between the supporting face (28) and the threaded portion (24) and on which the driven part (4) is seated, a friction-increasing frictional element (42) being arranged between the tension nut (23) and the driven part (4).

9. Fastening arrangement (1) according to Claim 1, **characterized in that** the end portion (10) of the camshaft (9) is provided with a frustoconical taper portion (45) which is arranged between the supporting face (28) and the threaded portion (24) and on which the driven part (4) is seated, there being arranged a connection element (46) which connects the tension nut (23) and the end portion (10) of the camshaft (9) fixedly in terms of rotation to one another.

10. Fastening arrangement (1) according to Claim 1, **characterized in that** the end portion (10) of the camshaft is provided with a frustoconically designed taper portion (45) which is arranged between the supporting face (28) and the threaded portion (24) and on which the driven part (4) is seated, there being arranged between the tension nut (23) and the driven part (4) a taper ring (49) which is partially accommodated in a receptacle (48) of the driven part (4).

11. Fastening arrangement (1) according to one of Claims 1 to 10, **characterized in that** the actuating mechanism comprises a hydraulic control valve (12) accommodated in a cavity (11) of the end portion (10) of the camshaft (9), with a valve housing (13) and with a control piston (14) accommodated axially displaceably therein, the valve housing (13) being secured axially by a securing ring (33) accommodated in an annular groove (34) of the end portion (10).

12. Fastening arrangement (1) according to one of Claims 1 to 10, **characterized in that** the actuating mechanism comprises a hydraulic control valve (12) accommodated in a cavity (11) of the end portion (10) of the camshaft (9), with a valve housing (13) and with a control piston (14) accommodated axially displaceably therein, the valve housing (13) being secured axially by a radial collar (36) of the tension nut (23).

## Revendications

1. Agencement de fixation (1) pour la fixation d'un déphaseur d'arbre à cames (2) sur un arbre à cames (9), comprenant une partie d'entraînement (3) pouvant être amenée en liaison d'entraînement avec un vilebrequin, une partie de sortie (4) connectée de manière solidaire en rotation à l'arbre à cames (9), laquelle est montée de manière réglable en rotation par rapport à la partie d'entraînement (3), ainsi qu'un mécanisme de commande par le biais duquel une position d'angle de rotation entre la partie d'entraînement et la partie de sortie (3, 4) peut être réglée,
- la partie de sortie (4) étant pourvue d'une ouverture axiale centrale (8) traversée par une section d'extrémité (10) de l'arbre à cames (9),
- la section d'extrémité (10) présentant une section filetée (24) portant un filetage, qui est vissée à un écrou de serrage (23) sollicitant la partie de sortie (4) de telle sorte que la partie de sortie (4) et l'arbre à cames (9) soient serrés axialement en vue de leur connexion solidaire en rotation avec une surface de support (28) formée par l'arbre à cames (9),
- l'écrou de serrage (23) étant sollicité élastiquement dans la direction axiale de manière à s'opposer à un relâchement de l'écrou de serrage (23),
un corps déformable élastiquement (30) étant disposé entre l'écrou de serrage (23) sollicitant la partie de sortie (4) et la partie de sortie,
**caractérisé en ce que**
le corps déformable élastiquement (30) est fabriqué en acier à ressort.

2. Agencement de fixation (1) selon la revendication 1, **caractérisé en ce que** le corps déformable élastiquement (30) est connecté fixement à l'écrou de serrage (23).

3. Agencement de fixation (1) selon la revendication 1, **caractérisé en ce que** la partie de sortie (4) est serrée axialement par l'écrou de serrage (23) avec une surface de support (28) formée par l'arbre à cames (9), l'écrou de serrage (23) étant lui-même réalisé sous forme de corps déformable élastiquement.

4. Agencement de fixation (1) selon la revendication 3, **caractérisé en ce que** l'écrou de serrage (23) est une pièce formée en tôle.

5. Agencement de fixation (1) selon la revendication 1, **caractérisé en ce que** la section d'extrémité (10) de l'arbre à cames (9) est pourvue d'une section de déformation (40) disposée entre la surface de support (28) et la section filetée (24), laquelle section de déformation est réalisée de telle sorte qu'elle soit déformée élastiquement lors du vissage de l'écrou de serrage (23).

6. Agencement de fixation (1) selon la revendication 5, **caractérisé en ce que** la section de déformation (40) de l'arbre à cames (9) présente une plus faible épaisseur de paroi que des sections d'arbre à cames adjacentes à celle-ci.

7. Agencement de fixation (1) selon la revendication 1, **caractérisé en ce que** la partie de sortie (4) est pourvue d'une section de déformation (44) adjacente à l'écrou de serrage (23), laquelle est réalisée de telle sorte qu'elle soit déformée élastiquement lors du vissage de l'écrou de serrage (23).

8. Agencement de fixation (1) selon la revendication 1, **caractérisé en ce que** la section d'extrémité (10) de l'arbre à cames est munie d'une section conique de forme tronconique (45) disposée entre la surface de support (28) et la section filetée (24), sur laquelle repose la partie de sortie (4), un élément de friction (42) amplifiant le frottement étant disposé entre l'écrou de serrage (23) et la partie de sortie (4).

9. Agencement de fixation (1) selon la revendication 1, **caractérisé en ce que** la section d'extrémité (10) de l'arbre à cames (9) est munie d'une section conique de forme tronconique (45) disposée entre la surface de support (28) et la section filetée (24), sur laquelle repose la partie de sortie (4), un élément de liaison (46) étant prévu, lequel relie l'un à l'autre de manière solidaire en rotation l'écrou de serrage (23) et la section d'extrémité (10) de l'arbre à cames (9).

10. Agencement de fixation (1) selon la revendication 1, **caractérisé en ce que** la section d'extrémité (10) de l'arbre à cames est munie d'une section conique de forme tronconique (45) disposée entre la surface de support (28) et la section filetée (24), sur laquelle repose la partie de sortie (4), une bague clavetée (49) reçue en partie dans un logement (48) de la partie de sortie (4) étant disposée entre l'écrou de serrage (23) et la partie de sortie (4).

11. Agencement de fixation (1) selon l'une quelconque des revendications 1 à 10, **caractérisé en ce que** le mécanisme de commande comprend une soupape de commande hydraulique (12) reçue dans une cavité (11) de la section d'extrémité (10) de l'arbre à cames (9), avec un boîtier de soupape (13) et un piston de commande (14) reçu de manière déplaçable axialement dans celui-ci, le boîtier de soupape (13) étant fixé axialement par une bague de fixation (33) reçue dans une rainure annulaire (34) de la section d'extrémité (10).

12. Agencement de fixation (1) selon l'une quelconque des revendications 1 à 10, **caractérisé en ce que** le mécanisme de commande comprend une soupape de commande hydraulique (12) reçue dans une cavité (11) de la section d'extrémité (10) de l'arbre à cames (9), avec un boîtier de soupape (13) et un piston de commande (14) reçu de manière déplaçable axialement dans celui-ci, le boîtier de soupape (13) étant fixé axialement par un collet radial (36) de l'écrou de serrage (23).
